## Europäisches Patentamt

## European Patent Office

## Office européen des brevets

(11) Veröffentlichungsnummer: **0 126 022**
A2

(12) **EUROPÄISCHE PATENTANMELDUNG**

(21) Anmeldenummer: 84730047.2

(22) Anmeldetag: 05.05.84

(51) Int. Cl.³: **A 23 G 1/00**
A 23 G 1/22, A 23 G 3/28

(30) Priorität: 13.05.83 DE 3317973

(43) Veröffentlichungstag der Anmeldung:
21.11.84 Patentblatt 84/47

(84) Benannte Vertragsstaaten:
AT BE CH FR GB IT LI NL SE

(71) Anmelder: Imhoff, Hans
Industriestrasse 27-31
D-5000 Köln 90 (Porz-Westhoven)(DE)

(72) Erfinder: Imhoff, Hans
Industriestrasse 27-31
D-5000 Köln 90 (Porz-Westhoven)(DE)

(74) Vertreter: Diehl, Paul
Alt-Moabit 89
D-1000 Berlin 21(DE)

(54) Tafelschokolade zur Abpackung in den handelsüblichen Gewichtsgrössen.

(57) Die erfindungsgemäße Tafelschokolade hat, abweichend von den Üblichen Tafeln, eine drei- oder sechseckige Form mit randparallelen Kerben, die das Abbrechen dreieckiger und sechseckiger Riegel gestattet, die sich für viele dekorative Zwecke, die bisher nicht erreicht werden konnten, einsetzen lassen.

Auch kann man jetzt bequem ein einzelnes Stück abbrechen, während bisher fast immer eine ganze Reihe der Tafelschokolade abbrach.

Die erfindungsgemäße Form der Tafelschokolade hebt die Waren des Herstellers gegenüber denjenigen eines anderen Herstellers wirksam ab.

FIG.1

- 1 -

Tafelschokolade zur Abpackung in den handelsüblichen Gewichtsgrößen

Die Erfindung betrifft eine Tafelschokolade zur Abpackung in handelsüblichen Gewichtsgrößen. Derartige Tafelschokoladen werden bisher ausschließlich in Rechteck- oder Quadratform auf den Markt gebracht. Durch die seitenparallel verlaufenden Kerben ergeben sich dabei rechteckige oder auch quadratische abbrechbare Stücke, die dann, wenn sie beispielsweise zur Dekoration von Torten, Kuchen oder Pudding und dergleichen verwendet werden sollen, sofort hinsichtlich ihrer Herkunft als Teile einer Schokoladentafel erkannt werden, wodurch ihr Dekorationswert begrenzt ist.

Der Erfindung liegt die Aufgabe zugrunde, eine Tafelschokolade zu schaffen, deren abgebrochene Stücke eine bisher nicht bekannte Vielfalt von Formen haben. Auch soll die gesamte Tafel eine eigenartige Form erhalten.

Erfindungsgemäß wird diese Aufgabe dadurch gelöst, daß die Tafelschokolade eine drei- oder sechseckige Grundform hat, die durch mehrere seitenparallele Bruchkerben in abbrechbare, wiederum drei- oder sechseckige oder auch anders geformte Stücke unterteilt ist.

Da die Herstellungsweise und auch schließlich die Verwendung einer erfindungsgemäßen Tafelschokolade die gleichen sind wie bisher, wird erfindungsgemäß ohne

- 2 -

jeden zusätzlichen Kostenaufwand eine besonders dekorative Gestaltung der Tafelschokolade und auch der abzubrechenden Einzelriegel geschaffen, die sich vorzüglich auch zur Tafeldekoration aber auch für die Herstellung von dekorierten Konditoreiwaren und Süßspeisen eignet.

Das durch die neuartige Anordnung der Einzelstücke beim Brechvorgang entstehende Schokoladenteil ist auch geeignet, als "Pralinenersatz" verwendet zu werden. Die Präsentation dieser Einzelstücke, z.B. in einer Schale, erweckt im Gegensatz zu der zerstückelten, herkömmlichen Tafel nicht den Eindruck von Schokoladenfragmenten, sondern vielmehr von den Gästen anbietbaren Einzelstücken.

Die eigenartige Form der erfindungsgemäßen Tafelschokolade erleichtert es im Übrigen dem Verkehr, gerade diese besondere Sorte aus dem Gesamtangebot auszuwählen.

Weitere Merkmale der Erfindung sind in den Unteransprüchen angegeben und werden im folgenden unter Bezugnahme auf die in der Zeichnung dargestellten Ausführungsbeispiele näher erläutert. Es zeigen:

Fig. 1 die schematische Darstellung einer erfindungsgemäßen Tafelschokolade mit dreieckiger Grundform und durch Kerben durchweg in abbrechbare Stücke dreieckiger Grundform unterteilt,

Fig. 2 ein weiteres Ausführungsbeispiel einer erfindungsgemäßen Tafelschokolade, die durch andere Anordnung der Kerben sowohl in streifenförmige
als auch dreieckige, abbrechbare Stücke unterteilt ist,

Fig. 3 die schematische Darstellung eines anderen Ausführungsbeispieles einer Tafelschokolade mit
dreieckiger Grundform,

Fig. 4 die schematische Darstellung eines erfindungsgemäßen Ausführungsbeispieles mit abgewandelter
dreieckiger Grundform,

Fig. 5 die schematische Darstellung einer erfindungsgemäßen Tafelschokolade mit sechseckiger Grundform,

Fig. 6 die perspektivische Darstellung des Ausführungsbeispieles gem. Fig. 5 und

Fig. 7 die schematische Darstellung einer Verpackung
für eine Tafelschokolade gem. den Figuren 1
bis 3 mit einer Beschriftung in bestimmter Zuordnung zu den Seitenkanten der Verpackung.

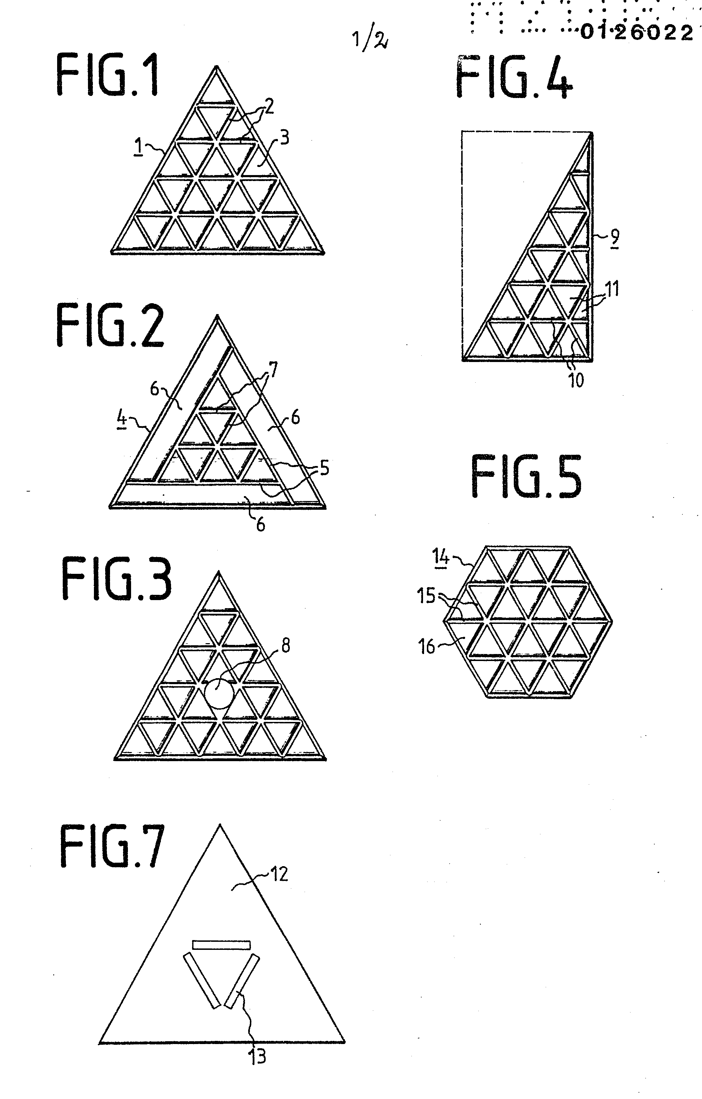

Gem. Fig. 1 weist die erfindungsgemäße Tafelschokolade 1
mit dreieckiger Grundform drei Gruppen von seitenparallelen Kerben 2 auf. Durch diese seitenparallelen Kerben 2

- 4 -

werden wiederum dreieckige, abbrechbare Stücke 3 gebildet. Da jeweils sechs dreieckige Stücke 3, die mit ihren Spitzen an ein und demselben Kreuzungspunkt der Kerben 2 liegen, ein Sechseck bilden, kann man aus der dreieckigen Tafelschokolade 1 auch drei sechseckige Stücke herausbrechen und erhält daneben noch sechs dreieckige Stücke 3.

Gemäß Figur 2 wird die in der Grundform dreieckige Tafelschokolade 4 durch die Kerben 5 u. 7 in etwas anderer Weise aufgeteilt. Durch die drei randparallelen Kerben 5 werden die drei abbrechbaren Riegel 6 gebildet, während die Kerben 7, genau wie im Ausführungsbeispiel gem. Fig.1, dreieckige Stücke 3 begrenzen bzw. das Herausbrechen eines sechseckigen Stückes sowie dreier dreieckiger Stücke 3 erlauben.

Das Ausführungsbeispiel gemäß Figur 3 unterscheidet sich von demjenigen gemäß Figur 1 nur dadurch, daß in der Mitte desselben eine durchgehende Öffnung 8 vorgesehen ist. Die durchgehende Öffnung 8 erlaubt beispielsweise das Aufreihen der Tafelschokoladen auf einer Schnur oder auch das Übereinanderstapeln derselben auf einer senkrechten, hier nicht dargestellten Ständersäule, von der stets nur die oberste Tafelschokolade abgenommen werden kann. Auf jeden Fall trägt die Öffnung 8 zur dekorativen Besonderheit der Tafelschokolade bei.

In Figur 4 ist ein anderes Ausführungsbeispiel einer erfindungsgemäßen Tafelschokolade dargestellt, die zwar

- 5 -

ebenfalls eine dreieckige Grundform hat, wobei jedoch in diesem Falle ein rechtwinkliges,ungleichschenkliges Dreieck gewählt wurde. Die Einteilung der Tafelschokolade 9 durch Kerben 10 in einzelne Stücke 11 ist die gleiche wie bei den zuvor erläuterten Ausführungsbeispielen. Diese Form der Tafelschokolade 9 besitzt den Vorteil, daß sich jeweils zwei Tafelschokoladen 9, die, wie durch die gestrichelte Linie angedeutet, nebeneinandergelegt werden, zu einem Rechteck ergänzen und in einem entsprechend bemessenen Karton ohne Zwischenräume verpackt werden können.

Figur 5 zeigt ein weiteres Ausführungsbeipsiel für eine erfindungsgemäße Tafelschokolade 14, die diesmal eine sechseckige Grundform hat. Bei entsprechender Zuordnung der seitenparallelen Kerben 15 werden wiederum dreieckige Stücke 16 gebildet, es lassen sich jedoch auch, entsprechend der zu Figur 1 gegebenen Erläuterung, drei sechseckige und sechs dreieckige Stücke 16 abbrechen.

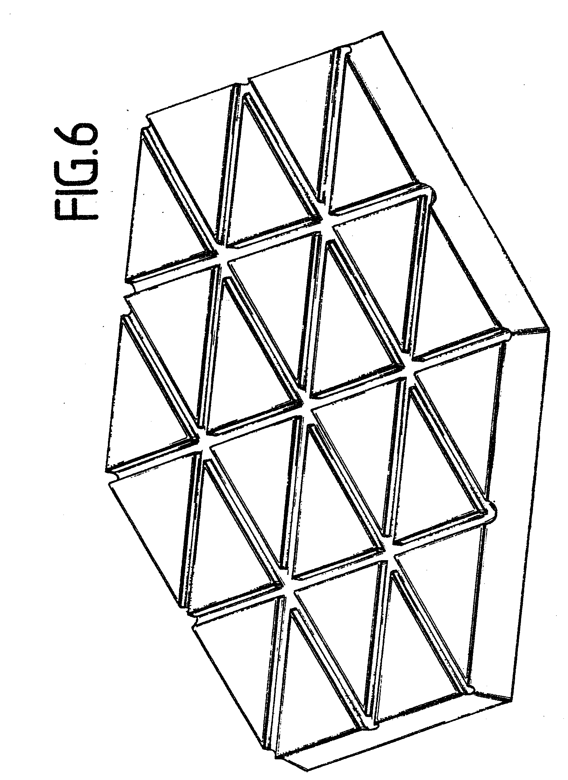

In Figur 6 ist die in Figur 5 schematisch in der Draufsicht wiedergegebene sechseckige Tafelschokolade 14 perspektivisch dargestellt. Man erkennt die kompakte, neuartige Form dieser Tafelschokolade 14, die die erwähnte Aufteilung sowohl in dreieckige als auch in sechseckige Einzelstücke erlaubt.

Figur 7 zeigt das Beispiel einer Umhüllung 12 für eine

- 6 -

der beispielhaft erläuterten Tafelschokoladen. Das Besondere an dieser Umhüllung 12 ist die Anordnung der drei durch Rechtecke angedeuteten Schriftzüge 13 im mittleren Bereich dieser Umhüllung 12, die sämtlich so angeordnet sind, daß sie bei aufrechtstehender Umhüllung 12 stets waagerecht verlaufen, gleichgültig, auf welche der drei Außenkanten diese Umhüllung 12, die eine Tafelschokolade enthält, gestellt wird.

- 1 -

Ansprüche :

1. Tafelschokolade zur Abpackung in den handelsüblichen Gewichtsgrößen, g e k e n n z e i c h n e t durch eine drei- oder sechseckige Grundform, die durch seitenparallele Kerben (2, 7, 15) in abbrechbare, wiederum drei- oder sechseckige Stücke (3, 11, 16) unterteilt ist.

2. Tafelschokolade nach Anspruch 1, dadurch g e k e n n - z e i c h n e t , daß die Kerben (2, 7, 15) so gelegt sind, daß die abbrechbaren Stücke (3, 11, 16) durchweg eine Dreieckform haben.

3. Tafelschokolade nach Anspruch 1, dadurch g e k e n n - z e i c h n e t , daß die Kerben (2, 7, 15) so gelegt sind, daß die abbrechbaren Stücke in den Randzonen streifenförmig, im mittleren Bereich jedoch drei- bzw. sechseckig sind.

4. Tafelschokolade nach einem oder mehreren der Ansprüche 1 bis 3, g e k e n n z e i c h n e t durch eine gleichseitige Dreieckform.

5. Tafelschokolade nach einem oder mehreren der Ansprüche 1 bis 3, g e k e n n z e i c h n e t durch eine rechtwinklig ungleichschenklige Dreiecksform.

- 2 -

6. Tafelschokolade nach einem oder mehreren der Ansprüche 1 bis 5, dadurch g e k e n n z e i c h n e t , daß in der Tafelmitte eine Öffnung (8) vorgesehen ist.

7. Tafelschokolade nach Anspruch 1 bis 6, dadurch g e - k e n n z e i c h n e t , daß mindestens eine Kante als Stellfläche ausgebildet ist.

8. Tafelschokolade nach Anspruch 1 bis 7, dadurch g e - k e n n z e i c h n e t , daß die genau auf die besondere Größe und Form derselben abgestimmte Umhüllung (12) so bedruckt ist, daß der Artikelname stets als waagerechter Schriftzug (13) lesbar ist, gleichgültig, welche der Seitenkanten als Stellfläche dient.

FIG.1

FIG.2

FIG.3

FIG.7

FIG.4

FIG.5

FIG.6